# EUROPEAN PATENT APPLICATION

(11) **EP 2 190 092 A2**
(43) Date of publication of application: **26.05.2010**
(21) Application number: 09176363.1
(22) Date of filing: 18.11.2009
(51) Int. Cl.: H02G 13/00

(54) **Improved lightning protection system for wind turbines**

(30) Priority: 19.11.2008 DK 200801615; 19.11.2008 US 199834 P
(71) Applicant: Vestas Wind Systems A/S, 8940 Randers - SV (DK)
(72) Inventor: Narasimalu, Srikanth, 535206, Singapore (SG); Haraguchi, Yoshiki, 556124, Singapore (SG); Wouterson, Erwin Merijn, 649815, Singapore (SG)
(74) Representative: Plougmann & Vingtoft A/S

(57) **Abstract**

The present invention relates to a system, method and software for protecting wind turbines from lightning strikes, as well as a wind turbine comprising the system for lightning protection, wherein at least one lightning strike protection element of said LSP system is ionized prior to a lightning strike, thus reducing the chance of damaging unprotected part(s) of the blade(s) of the wind turbine.

## Description

### FIELD OF THE INVENTION

The present invention relates to a system, method and software for protecting wind turbines from lightning strikes, as well as a wind turbine comprising the system for lightning protection thereof.

### BACKGROUND OF THE INVENTION

A study published in 2002 by the National Renewable Energy Laboratory (B. McNiff, Wind Turbine Lightning Protection Project 1999-2001, National Renewable Energy Laboratory (NREL), U.S. Dept. of Energy, Golden, CO, USA) states that about 8 out of every 100 wind turbines could be expected to receive one direct lightning strike every year. According to the statistics quoted in IEC TR 61400-24, 7-10% of damages caused by lightning was to the rotor blades (IEC TR 61400-24, Wind Turbine Generator Systems, Part 24: Lightning Protection, International Electrotechnical Commission, First edition 2002-07). The blades of a wind turbine are most likely to be damaged when struck by lightning due to the presence of fiber glass which exhibits a highly resistive behavior. Even carbon fiber reinforced epoxies are not capable of conducting away the large amounts of current and heat from a single bolt of lightning. The wind turbine blades account for 15-20% of the cost of a wind turbine and hence damage thereto is very costly (F.M. Larsen, T. Sorensen, New Lightning Qualification Test Procedure for Large Wind Turbine Blades, 2002).

Wind turbines are prone to being struck by lightning because they are often erected in areas which are often vast, flat terrain coinciding with areas of thunderstorm activity (B. Glushakow, Effective Lightning Protection for Wind Turbine Generators, IEEE Transactions on Energy Conversion, Vol. 22, No.1, March 2007).

When a lightning bolt strikes an unprotected structure, a current up to about 200 kA seeks the path of least resistance. Direct effects typically include vaporization of resin in the immediate strike area, with possible burn-through of the laminate.

Indirect effects occur when magnetic fields and electrical potential differences in the structure induce transient voltages, which can damage and even destroy onboard electronics that have not been EMF (electromagnetic field) shielded or lightning protected. The need for protection of composite structures has prompted the development of a number of specialized LSP (lightning strike protection) materials.

Effective protection against lightning is crucial for ensuring the structural integrity of the blades, lifespan, safety and efficiency of the wind turbine. Common lightning strike protection (LSP) technology requires the use of a number of receptors and an inner down conductor inside the blade to conduct the charge away to the tower. This method is effective for blades with a length between about 20-30 meters. When lightning hits a blade of above about 40 m in length, the arc might either penetrate the surface and proceed towards the inner lightning conductor, or move along the surface to the nearest receptor. The penetration is critical and usually implies a delamination, while the arc movement along the surface may leave physical erosion referred to as tracking (S.F. Madsen, J. Holboell, M. Henriksen, N. Bjaert, Tracking tests of Glass fibre Reinforced Polymers (GRP) as part of improved lightning protection of wind turbine blades, International Conference on Lightning Protection, Avignon, France, 2004).

LM Glassfiber A/S has introduced diverter strips in its LSP system (EP 1,892,797 A1). These known diverter strips are made of metal or a composite of a polymeric resin and metallic particles. Metal materials or metallic particles are used for their conductivity properties. The resulting segmented diverters use many small, closely spaced air gaps that ionize when these metallic and conductive particles are exposed to a strong electrical field as the result of a lightning strike. This leads to short circuit among the particles of the diverter strip, and a conductive ionized channel is created in the air above these particles and across the protected surface, guiding the current, rather than conducting it, to a receptor (L. B. Hansen, J. Korsgaard and I. Mortensen, Improved Lightning Protection System Enhances the Reliability of Multi-MW Blades, LM GLasfiber A/S, October 2005). Disruption of the aerodynamic flow over the blade profile and entrapment of dirt in between the air gaps are believed to be some of the disadvantages.

Independently and separately, it has been reported by Lightning Eliminators & Consultants, Inc. that ionization of air in their lightning strike collectors comprising ion plasma generators, improves the attraction of lightning strikes (http://Iecglobal.com/solutions/lightning/protection/ion-plasma-generator/).

As wind turbines continue to increase in size, there is a corresponding increase in the risks of being struck by lightning, which requires the development of an improved lightning protection system for wind turbines.

Hence, an improved system, method and software for protecting wind turbines from lightning strikes, as well as an improved wind turbine comprising said improved system for lightning protection, would be advantageous, and in particular a more efficient and/or reliable system, method and software for protecting wind turbines from lightning strikes, as well as a wind turbine comprising said more efficient and/or reliable system for lightning protection, would be advantageous.

### OBJECT OF THE INVENTION

It is an object of the present invention to provide an improved LSP system for wind turbines comprising diverter strips, by using improved LSP materials and/or arrangements, as for example those designed for use in the aerospace industry.

Another object of the invention is to provide a wind turbine comprising a LSP system comprising diverter strips made of or containing improved LSP materials and/or arrangements.

Yet another object of the present invention is to provide a system, method and software for protecting wind turbines from lightning strikes, as well as a wind turbine comprising said LSP system, wherein the diverter strips of the blades are being ionized prior to a lightning strike in order to increase the attraction of the lightning strike towards one of the diverter strips of the blades, thus reducing the chance of damaging other (unprotected) parts of the blade.

A further object of the present invention is to provide a system, method and software for protecting wind turbines from lightning strikes, as well as a wind turbine comprising said LSP system, wherein the LSP system comprises a lightning sensor for triggering ionization of diverter strips on the blades prior to a lightning strike.

It is a further object of the present invention to provide an alternative to the prior art.

In particular, it may be seen as an object of the present invention to provide a system, method and software for protecting wind turbines from lightning strikes, as well as a wind turbine comprising said system for lightning protection, that solves the above mentioned problems of the prior art.

### SUMMARY OF THE INVENTION

The above described objects and several other objects are intended to be obtained in a first aspect of the present invention by providing a system for protecting wind turbines from lightning strikes, comprising at least one lightning strike protection element for example in the form of a diverter strip on at least one blade of the wind turbine, means for providing information that a risk of lightning strike has been determined, and ionization means for ionizing said at least one lightning strike protection element or diverter strip of said at least one blade when the information has been provided and prior to a lightning strike hit.

In one embodiment of the LSP system for protecting wind turbines according to the present invention said at least one lightning strike protection element or diverter strip can be made of a material exhibiting conductivity that is larger than that of copper, e.g. SWCNT (single-walled carbon nanotubes), MWCNT (multi-walled carbon nanotubes), buckpaper.

In another embodiment of the LSP system for protecting wind turbines according to the present invention, said LSP system, and in particular said means for providing information, can comprise lightning sensing means for detecting an oncoming lightning strike and providing a triggering signal used by said ionization means in the process of triggering the ionization of said lightning strike protection elements or diverter strips prior to the lightning strike. The lightning sensing means can comprise a lightning sensor and can for example be placed on top of the wind turbine nacelle. Furthermore, the LSP system can comprise means for shutting down the ionization means once or right after the lightning strike has been lead to the wind turbine tower or discharged to earth.

Another aspect of the present invention provides a wind turbine comprising said system for lightning protection.

Yet another aspect of the present invention provides a method for protecting wind turbines from lightning strikes, comprising the steps of: providing information that a risk of lightning strike has been determined; and ionizing at least one lightning strike protection element, which can be in the form of a diverter strip, on at least one blade of the wind turbine when the information has been provided and prior to a lightning strike hit. Once or right after / immediately after the lightning strike has been lead to the wind turbine tower or discharged to the earth, the ionization of said at least one lightning strike protection element or ionization means is shut down.

In one embodiment of the method for protecting wind turbines according to the present invention further comprises: sensing or detecting an oncoming lightning strike, and providing (when the oncoming lightning strike is detected) a triggering signal used in the process of or for triggering the ionization of said lightning strike protection elements or diverter strips prior to the lightning strike.

A further aspect of the present invention provides a computer program product or software or a computer readable and/or useable code on a computer readable and/or useable medium, being adapted to enable and/or manage and/or control said system for protecting wind turbines from lightning strikes.

In yet another aspect, the invention relates to a computer program product or software or a computer readable and/or useable code on a computer readable and/or useable medium, being adapted to utilize and/or perform said method for protecting wind turbines from lightning strikes.

The main features of the present invention are described in the independent claims. Additional features of the invention are presented in the dependent claims.

In general by writing that "it is an advantage" by the present invention and referring to an advantage, it must be understood that this advantage may be seen as a possible advantage provided by the invention, but it may also be understood that the invention is particularly, but not exclusively, advantageous for obtaining the described advantage.

In general the various objects, aspects and advantages of the invention may be combined and coupled in any way possible within the scope of the invention.

These and other objects, aspects, features and/or advantages of the invention will be apparent from and elucidated with reference to the embodiments described hereinafter.

### BRIEF DESCRIPTION OF THE DRAWINGS

The present invention will now be described in more detail with regard to the accompanying drawings. The drawings show one way of implementing the present invention and is not to be construed as being limiting to other possible embodiments falling within the scope of the attached claim set.
Fig. 1 shows a common lightning protection on wind turbine blades (prior art);
Fig. 2 illustrates a wind turbine according to the present invention;
Fig. 3 illustrates possible shapes or patterns of a diverter strip segment of the diverter strip as given in EP 1,892,797 A1;
Fig. 4 shows an example of carbon nanotubes grown in a certain pattern;
Fig. 5 shows a flow diagram of the present invention.

### DETAILED DESCRIPTION OF THE EMBODIMENTS

According to the present invention, in an improved lightning protection or LSP system for wind turbines, the metallic materials or particles in the lightning strike protection element(s) or diverter strip(s) are replaced by materials comprising a higher conductivity compared to existing LSP materials. Candidate materials include single wall and/or multi-wall carbon nanotubes or buckypaper. The advantages are as follows:
- Materials with a higher conductivity than the existing LSP materials are expected to improve attraction and guidance of lightning strike charges.
- The thickness of a strip made of a material exhibiting higher conductivity is expected to be thinner compared to existing diverter strips, minimizing the disruption of the aerodynamic flow around the blade profile. The thickness of the strip will probably be in the order of about 100 microns. However, these strips are not limited to these dimensions.
- No change in the current production process or blade design is required. The diverter strips can be applied onto ready-made wind turbine blades.
- New patterns and/or shapes of carbon nanotube diverter strips can be created using conventional methods for growing carbon nanotubes.

Table 1 below clearly shows that carbon nanotubes, e.g. single-walled nanotubes (SWNT or SWCNT) or multi-walled nanotubes (MWNT), exhibit quite improved conductivity compared to that of copper.

**Table 1: Comparison of various electrical conductive materials**

| Material | Electrical resistivity (Ω/m) | Density (kg/m³) | Thermal conductivity (Wm⁻¹K⁻¹) | Tensile strength (GPa) |
|---|---|---|---|---|
| Copper | 1.68 x 10⁻⁸ | 8920 | 385 | 0.07 |
| Aluminum | 2.65 x 10⁻⁸ | 2700 | 237 | 0.40 |
| SWNT | 1.72 x 10⁻¹¹ | 500 | 6600 | 126 |
| MWNT | 1.70 x 10⁻⁸ | 1300 | 2500 | 150 |

The improved conductivity of the LSP system according to the present invention is expected to increase the attraction of the lightning strike, thus preventing and/or reducing the chance of unprotected parts of the blade from being hit by lightning. Additional advantage of the materials like carbon nanotubes is that the density is far less compared to that of copper, which will result in weight savings compared to the existing LSP systems.

The improved lightning protection system according to the present invention can further comprise information means for providing information that a risk of lightning strike has been determined and ionization means adapted to ionize the lightning strike protection element(s) or the diverter strip(s), and if desired the receptor, when the risk information has been provided and prior to a lightning strike hit. Pre-ionization of the diverter strip(s) is expected to increase the attraction of the lightning strike towards the diverter strip(s), thus reducing the chance of damaging other (unprotected) parts of the blade(s) of the wind turbine.

In addition the information means of the LSP system for wind turbines according to the invention can comprise lightning sensing means for detecting an oncoming lightning strike and providing an ionization triggering signal. The lightning sensing means can comprise a lightning sensor used to trigger the ionization of the lightning strike protection elements or strips prior to the lightning strike. An advantage of the embodiment of the LSP system equipped with lightning sensing means, which for example can comprise a lightning sensor, is that the ionization of the lightning strike protection elements is triggered just before the lightning strike, thus reducing power consumption of the LSP system to a minimum. The power consumption of the LSP system will be reduced even more if the LSP system comprises means for shutting down the ionization means once or right after the lightning strike has been lead to the wind turbine tower or discharged to earth.

The present invention describes also a method for protecting wind turbines from lightning strikes, comprising the steps of: ionizing at least one lightning strike protection element on at least one blade of the wind turbine prior to a lightning strike and guiding the lightning strike charge towards a receptor. Prior to the ionization step the method can comprise the step of detecting an oncoming lightning strike. The ionization is shut down once the lightning strike has been lead to the wind turbine tower or discharged to the earth.

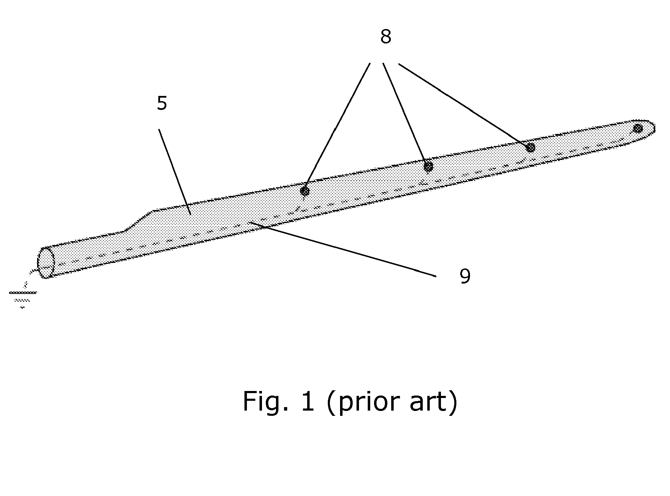

Fig. 1 shows the common lightning strike protection (LSP) technology that requires the use of a number of receptors 8 and an inner down conductor 9 inside a wind turbine blade 5 in order to conduct the charge away to the wind turbine tower 2.

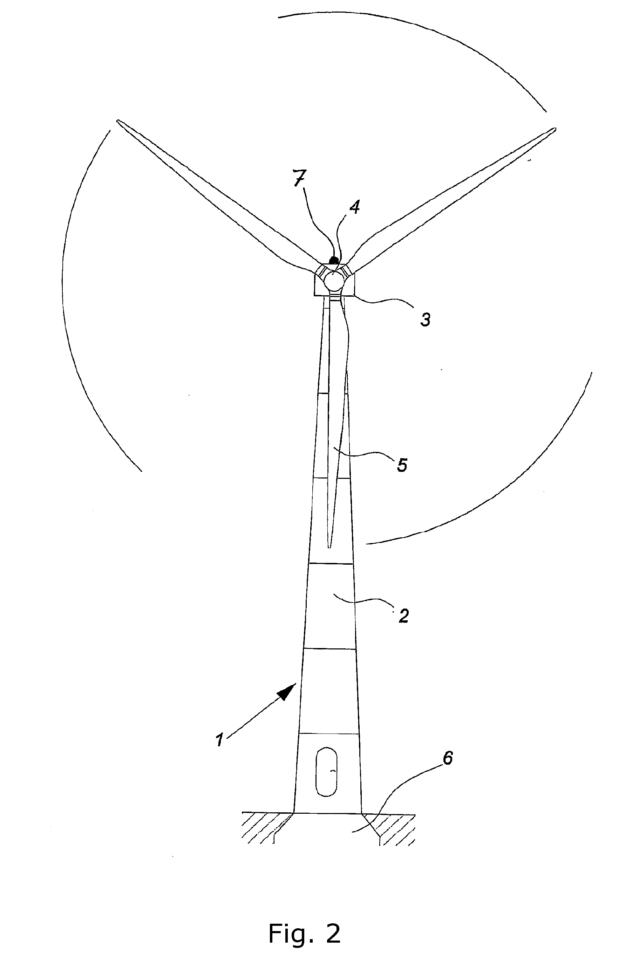

Fig. 2 illustrates a wind turbine 1 according to the present invention, comprising a tower 2 placed on a foundation 6 and a wind turbine nacelle 3 positioned on top of the tower 2, wherein the wind turbine further comprises said LSP system (not shown) comprising at least one lightning strike protection element (not shown) on a blade 5 of the wind turbine 1, information means (not shown) for providing information that a risk of lightning strike has been determined, and ionization means (not shown) for triggering ionization of said lightning strike protection elements when the information has been provided and prior to a lightning strike hit. The wind turbine rotor 4, comprising at least three wind turbine blades 5, is connected to the nacelle 3, e.g. through a low speed shaft (not shown) which extends out of the nacelle 3 front. The system, and particularly the information means, can comprise lightning sensing means 7 for detecting an oncoming lightning strike and providing an ionization triggering signal, wherein the lightning sensing means 7 can for example be placed on top of the nacelle 3.

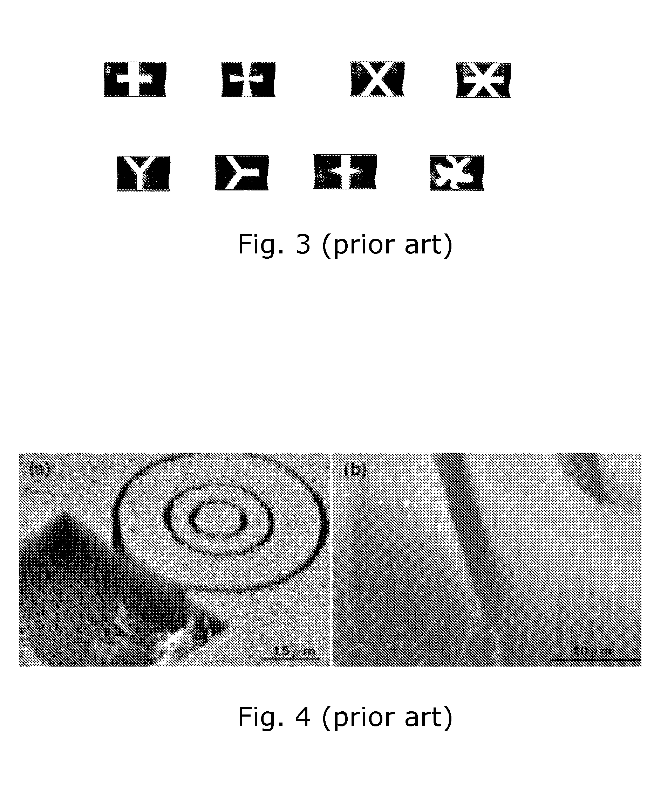

The lightning strike protection element of said LSP system can be a segmented or patterned diverter strip. Fig. 3 shows different possible shapes or patterns of a diverter strip segment of said segmented or patterned diverter strip, wherein the black contour illustrates the LSP element of the diverter strip segment, which can be made of single wall or multi-wall carbon nanotubes or buckypaper, and the white contour illustrates the small air gap of the diverter strip segment (cf. EP 1,892,797 A1).

The shapes or patterns of the diverter strip segment of said segmented or patterned diverter strip, shown in fig. 3, can easily be created with existing techniques used to grow carbon nanotubes. An example of carbon nanotubes grown in a certain pattern is shown in fig. 4, wherein b) (scale 10 µm), to the right, shows a part of a) (scale 15 µm), to the left, which is being magnified or blown up (cf. http://www.physorg.com/newman/gfx/news/MWCT3DCylinder.png).

Besides selective growth of carbon nanotubes (in different shapes and/or patterns shown for example in fig. 3), the height and direction of the nanotubes can be controlled as well. Typically, carbon nanotubes are grown, but are not limited to, between about 0,01 mm and about 10 mm in height. A low height is preferred as this will minimize the disruption of the aerodynamic airflow around the blade profile.

As mentioned before, the protection from lightning can be enhanced by ionizing gas or air. Ions from the ionized gas can cause the atmosphere around said at least one lightning strike protection element of the lightning protection system to become more conductive for the electrical current of lightning, thus encouraging a lightning strike to hit the LSP element of the lightning protection system, thereby reducing or eliminating the threat of the lightning strike hitting unprotected part(s) of the wind turbine generator. Therefore, it is advantageous to generate ionized gas in the vicinity of the lightning strike protection element of the lightning protection or LSP system whenever a storm cloud looms overhead.

In general, the ionization can be achieved by applying electrodes (e.g. copper foil) directly on the blade surface. Powering these electrodes by a battery or other power source, will ionize the surrounding air, creating plasma. A typical AC frequency of the input voltage supplied to the electrodes is, but is not limited to, 5 kHz. The AC voltage amplitude to the electrodes can be and is not limited to 7,5 kVp-p. In the embodiment of the invention where carbon nanotubes are used in the segmented or patterned diverter strips, these segments of carbon nanotubes can act as an electrode. Further suitable and appropriate embodiments of the ionization means are also possible.

As mentioned before, it is advantageous that the information means of the LSP system for wind turbines according to the invention comprises lightning sensing or sensor means for detection of the oncoming lightning strike, wherein said lightning sensing means can comprise a lightning sensor on top of the nacelle. All suitable methods and devices for detecting an oncoming lightning strike should be included. Of course, if a known device or method for detecting an oncoming lightning strike is used it should be accordingly adapted to the LSP system according to the present invention. Examples of lightning sensors or detectors are given in WO 94/25752 A1, JP 2004-311083, published US patent application No. 2005/0201865 A1 and by Guardian Equipment Company (http://www.guardianequipment.com/pages/warningsystems.html). The sensor can for example continuously monitor the atmosphere's electrostatic energy, for example as far away as about 15 miles, and can evaluate the potential for lightning within an area of approximately 2 miles in radius. When the sensor determines a hazardous condition, it can then trigger the ionization means through a wireless or wired signal. The lightning sensor can have a certain sensing radius, within which radius a storm or lightning cloud can be detected. Triggering the ionization system, ionizes the air above the lightning strike protection element(s) or the diverter strip(s), increasing the attraction of the lightning strike towards the lightning strike protection element or diverter strip, thus protecting other parts of the blade from being damaged.

The advantage of having such lightning sensor means and ionization means is that the blade components do not need to be ionized 24/7, but only just before lightning strike impact, reducing the power consumption to a minimum, yet increasing the reliability of the wind turbine blades and the LSP system. A further advantage is to have means for shutting down the ionization means once or right after the lightning strike has been lead to the wind turbine tower or discharged to earth.

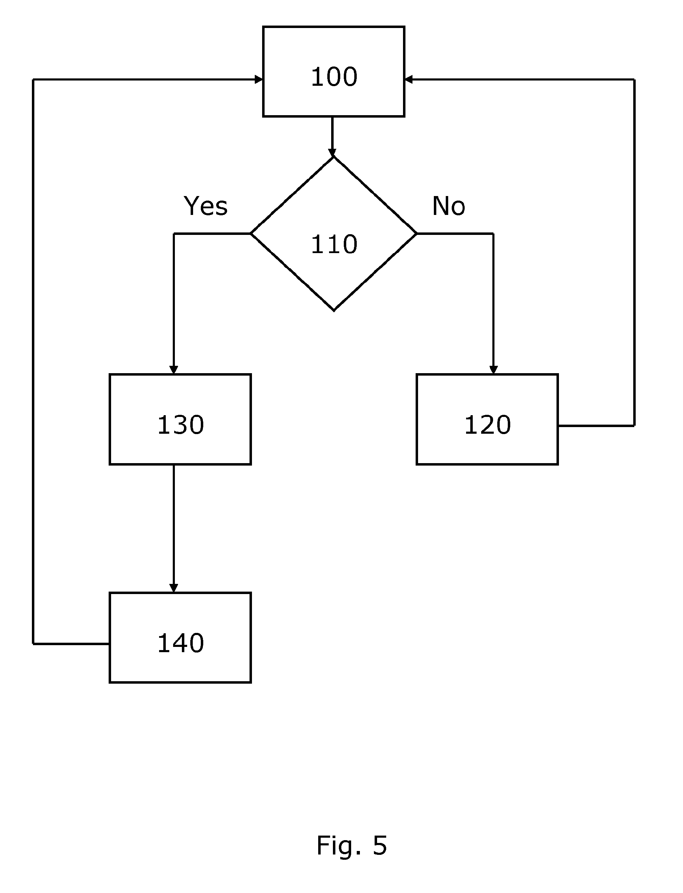

Fig. 5 illustrates a flowchart of the present invention. More particularly, fig. 5 illustrates one embodiment of the method of the present invention as well as one embodiment of the working procedures or operations of the system of the present invention. The method or the system according to the present invention can be continuously sensing 100 for lightning(s). The sensing modus 100 can be on all of the time or can be switched on and off according to certain whether conditions as for example, but not limited to, the air humidity and/or the air pressure, and/or the atmosphere's electrostatic energy etc. If no lightning is detected 110 "No", then said at least one diverter strip is not ionized 120, and the lightning sensing process 100 continues. If a lightning is detected 110 "Yes", then said at least one diverter strip is ionized 130. Once or right after the lightning strike has been lead to the wind turbine tower or discharged to the earth, the ionization means is switched off 140, and the lightning sensing process 100 continues.

In one aspect, the invention relates to a computer program product being adapted to perform and/or utilize the method for protecting wind turbines from lightning strikes according to the present invention.

In a further aspect, the invention relates to a computer program product being adapted to enable a computer system comprising at least one computer or CPU having data storage means in connection therewith to manage and/or control the LSP system for wind turbines according to the present invention.

This aspect of the invention is particularly, but not exclusively, advantageous in that the present invention may be accomplished by a computer program product enabling a computer system to carry out and/or manage and/or control the operations of the LSP system of the invention when down- or uploaded into the computer system. Such a computer program product may be provided on any kind of computer readable medium, or through a network.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the drawings shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A system for protecting wind turbines from lightning strikes, comprising at least one lightning strike protection element on at least one wind turbine blade, means for providing information that a risk of lightning strike has been determined, and ionization means for ionizing said at least one lightning strike protection element of said at least one blade when the information has been provided and prior to a lightning strike hit.

2. The system according to claim 1, wherein said at least one lightning strike protection element is a diverter strip.

3. The system according to claim 2, wherein said diverter strip has at least one pattern or shape.

4. The system according to any one of claims 1-3, wherein said at least one lightning strike protection element is made of carbon nanotubes.

5. The system according to claim any one of claims 1-4, wherein said system further comprises lightning sensing means for detecting an oncoming lightning strike and providing a triggering signal used by said ionization means in the process of triggering the ionization of said at least one lightning strike protection element prior to the lightning strike.

6. The system according to claim 5, wherein said lightning sensing means comprises a lightning sensor for detecting the oncoming lightning strike.

7. The system according to claim 6, wherein said lightning sensor is placed on top of a wind turbine nacelle.

8. The system according to any one of claims 1-7, wherein said system further comprises means for shutting down the ionization means once or right after the lightning strike has been lead to the wind turbine tower or discharged to earth.

9. A method for protecting wind turbines from lightning strikes, comprising the steps of:
- providing information that a risk of lightning strike has been determined,
- ionizing, with the help of ionization means, at least one lightning strike protection element on at least one wind turbine blade when the information has been provided and prior to a lightning strike hit, and
- shutting down the ionization of said at least one lightning strike protection element once or right after the lightning strike has been lead to the wind turbine tower or discharged to the earth.

10. The method of claim 9, further comprising the steps of: sensing or detecting an oncoming lightning strike, and providing a triggering signal used for triggering the ionization of said at least one lightning strike protection element prior to the lightning strike.

11. A wind turbine comprising the system of any one of claims 1-8.

12. A computer readable and/or useable code on a computer readable and/or useable medium adapted to enable and/or control the system of any one of claims 1-8.

13. A computer readable and/or useable code on a computer readable and/or useable medium adapted to perform the method of any one of claims 9-10.
